(19)

Europäisches
Patentamt
European
Patent Office
Office européen
des brevets

(11)  **EP 4 137 840 A1**

(12)  **EUROPEAN PATENT APPLICATION**

(43) Date of publication:
**22.02.2023  Bulletin 2023/08**

(21) Application number: **21191980.8**

(22) Date of filing: **18.08.2021**

(51) International Patent Classification (IPC):
**G01S 7/40** (2006.01)      **G01S 13/34** (2006.01)
**G01S 13/38** (2006.01)     **G01S 13/42** (2006.01)
**G01S 13/931** (2020.01)    **G01S 13/02** (2006.01)
**H01Q 3/26** (2006.01)

(52) Cooperative Patent Classification (CPC):
**G01S 7/4004; G01S 13/343; G01S 13/38;
G01S 13/42; G01S 13/931;** G01S 2013/0245

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **VOLKSWAGEN AG
38440 Wolfsburg (DE)**
• **Fraunhofer-Gesellschaft zur Förderung
der angewandten Forschung e.V.
80686 München (DE)**

(72) Inventors:
• **KURZ, Heiko Gustav
Hannover (DE)**
• **MEINECKE, Marc-Michael
Sassenburg (DE)**
• **MATEOS-NUNEZ, David
Bonn (DE)**
• **SIMONI, Renato
Bonn (DE)**

(74) Representative: **2SPL Patentanwälte PartG mbB
Landaubogen 3
81373 München (DE)**

Remarks:
Amended claims in accordance with Rule 137(2)
EPC.

(54)  **METHODS FOR DETERMINING A RELATIVE DISTANCE BETWEEN A FIRST ANTENNA ELEMENT AND A SECOND ANTENNA ELEMENT EACH BEING PART OF AN ANTENNA ARRAY, ANTENNA ARRAYS AND VEHICLE**

(57)      An embodiment of a method 100 for determining a relative distance r between a first antenna element and a second antenna element each being part of an antenna array, comprises transmitting 101 a first radar signal, with a first frequency $f_1$, by the first antenna element and receiving 102 a first receive signal, related to the first radar signal, by the second antenna element. The method 100 further comprises demodulating 103 the first receive signal based on the first radar signal to obtain a first intermediate signal $s_1$ having a first phase $\varphi_1$. Further, the method 100 comprises transmitting 104 a second radar signal, with a second frequency $f_2$, by the first antenna element and receiving 105 a second receive signal, related to the second radar signal, by the second antenna element. The method 100 further comprises demodulating 106 the second receive signal based on the second radar signal to obtain a second intermediate signal $s_2$ having a second phase $\varphi_2$. Further, the method 100 comprises determining 107 the relative distance r based on the first phase $\varphi_1$ and the second phase $\varphi_2$.

100

Transmitting a first radar signal, with a first frequency $f_1$, by the first antenna element — 101

Receiving a first receive signal, related to the first radar signal, by the second antenna element — 102

Demodulating the first receive signal based on the first radar signal to obtain a first intermediate signal $s_1$ having a first phase $\varphi_1$ — 103

Transmitting a second radar signal, with a second frequency $f_2$, by the first antenna element — 104

Receiving a second receive signal, related to the second radar signal, by the second antenna element — 105

Demodulating the second receive signal based on the second radar signal to obtain a second intermediate signal $s_2$ having a second phase $\varphi_2$ — 106

Determining the relative distance r based on the first phase $\varphi_1$ and the second phase $\varphi_2$ — 107

**Fig. 1**

EP 4 137 840 A1

**Description**

**Field**

The invention relates to methods for determining a relative distance r between a first antenna element and a second antenna element each being part of an antenna array, antenna arrays and a vehicle comprising an antenna array.

**Background**

Radio detection and ranging (radar) is commonly used to enable a perception of the surroundings. For example, for safe autonomous driving, environmental perception can be enabled by means of an antenna array. The antenna array comprises a number of antenna elements transmitting and receiving radio signals to enable detection of static or dynamic objects in the environment of the antenna array.

Due to manufacturing, antenna elements in antenna arrays may exhibit positional errors. Relative distances between different antenna element pairs are often associated with significant deviations with respect to nominal values. Changes in the relative distances also occur due to structural changes in the antenna array caused by thermal and/or mechanical effects over time. To enable a precise perception of objects in the surrounding, relative positions between different antenna elements of the antenna array need to be determined accurately.

So far, in the manufacturing process of antenna arrays end-of-line calibration techniques are applied to determine the true values of the relative distances between different antenna elements. However, these approaches are complex and expensive and are not applicable to determine subsequent structural changes in the antenna array. According to other techniques, external devices are used to obtain distance errors. Since these techniques require additional components, the complexity and cost of end-of-line calibration increases. Moreover, only estimation of small position errors can be achieved so far.

The resolution of current radar systems is limited. In order to meet the requirements for, e.g. advanced autonomous driving functions, radar systems need to provide 3D-images with high resolution. For this purpose, non-uniform antenna arrays are preferably used. However, calibration of non-uniform antenna arrays usually requires higher efforts.

There appears to be a demand to improve determination of relative distances between different antenna elements of an antenna array. Furthermore, there is a desire for an improved technique in the case of vehicles comprising antenna arrays.

**Summary**

This objective is achieved by the subject matter of any of the independent claims.

Some embodiments relate to a method for determining a relative distance r between a first antenna element and a second antenna element each being part of an antenna array. The method comprises transmitting a first radar signal, with a first frequency $f_1$, by the first antenna element and receiving a first receive signal, related to the first radar signal, by the second antenna element. The method further comprises demodulating the first receive signal based on the first radar signal to obtain a first intermediate signal $s_1$ having a first phase $\varphi_1$. Further, the method comprises transmitting a second radar signal, with a second frequency $f_2$, by the first antenna element and receiving a second receive signal, related to the second radar signal, by the second antenna element. The method further comprises demodulating the second receive signal based on the second radar signal to obtain a second intermediate signal $s_2$ having a second phase $\varphi_2$. Further, the method comprises determining the relative distance r based on the first phase $\varphi_1$ and the second phase $\varphi_2$. According to the proposed method, online and/or offline calibration of the antenna array can be enabled by using the first and second antenna element of the antenna array in conjunction with a first and second radar signal being transmitted and received after propagation. Since calibration can be performed by means of the antenna elements of the antenna array, external devices for calibration might not be needed. Further, integration and application of a complex end-of-line calibration during manufacturing of the antenna array might not be necessary. With the proposed method, large positional errors of the antenna elements may be determined precisely. Further, the relative distance may be determined directly, e.g. without knowledge of a phase imbalance between the first and second antenna element.

According to some embodiments, the first intermediate signal $s_1$ is a constant complex-valued signal being based on $s_1 = A_1 e^{j\phi_1} = A_1 e^{j(2\pi f_1 t_0 + \psi)}$ and the second intermediate signal $s_2$ is a constant complex-valued signal being based on $s_2 = A_2 e^{j\phi_2} = A_2 e^{j(2\pi f_2 t_0 + \psi)}$. $A_1$ relates to the amplitude of the first receive signal, $A_2$ relates to the amplitude of the second receive signal, c relates to the velocity of the respective radar signal being transmitted and $\psi$ relates to a phase imbalance between the first and second antenna element. The first receive signal and the second receive signal can be demodulated to determine the first and the second intermediate signal $s_1$ and $s_2$ each having a phase $\varphi_1$, $\varphi_2$ being related to the relative distance r and phase imbalance $\psi$ between the first and second antenna element. The first and second intermediate signal $s_1$, $s_2$ can be combined such that the relative distance r can be determined.

According to some embodiments, the method further comprises determining a phase imbalance $\psi$ between the first and second antenna element based on the relative distance r and at least one of the first phase $\varphi_1$ and the second phase $\varphi_2$. Since the phase $\varphi_1$, $\varphi_2$ of the first and second intermediate signal $s_1$, $s_2$ is also related to the phase imbalance $\psi$ between the first and second antenna element, the relative distance r and the first and/or second intermediate signal $s_1$, $s_2$ can be used to determine the phase imbalance $\psi$.

According to some embodiments, the first frequency $f_1$ and the second frequency $f_2$ comply with $|2\pi(f_1 - f_2)t_0| < \pi$ with $t_0$ being the time period between transmitting the first radar signal and receiving the first receive signal. Due to the condition, the values of the first and second frequency are similar to each other. By this means, the relative distance r and optionally the phase imbalance $\psi$ can be determined without ambiguity.

According to some embodiments, the method further comprises transmitting at least a third radar signal, with a third frequency $f_3$, by the first antenna element and receiving at least a third receive signal, related to the at least third radar signal, by the second antenna element. Further, the method comprises demodulating the at least third receive signal based on the at least third radar signal to obtain at least a third intermediate signal $s_3$ having a third phase $\varphi_3$. The method further comprises determining the relative distance r based on the first phase $\varphi_1$, second phase $\varphi_2$ and at least third phase $\varphi_3$. With the at least third radar signal, the relative distance r (and optionally the phase imbalance $\psi$) can be determined with higher accuracy since a sensitivity to noise can be reduced.

According to some embodiments, determining the relative distance r comprises using mixed-integer-programming. Mixed-integer-programming can enable a fast and efficient determination of the relative distance r and the phase imbalance $\psi$.

Some embodiments relate to a method for determining a relative distance r between a first antenna element and a second antenna element each being part of an antenna array. The method comprises transmitting a frequency modulated radar signal by the first antenna element and receiving a receive signal, related to the frequency modulated radar signal, by the second antenna element. The method further comprises mixing the receive signal with a copy of the frequency modulated radar signal to provide a beat signal and estimating a beat frequency within the beat signal. Further, the method comprises determining the relative distance r based on the beat frequency. Using the frequency modulated radar signal for determining the relative distance r can enable online and/or offline calibration of the antenna array. Calibration can be performed, e.g. during the process of perceiving objects in the surrounding of the antenna array and thus without interrupting the operation procedure. Since calibration can be performed by means of the antenna elements of the antenna array, external devices for calibration might not be needed and complex end-of-line calibration during manufacturing of the antenna array might be avoided. With the proposed method, large positional errors of the antenna elements may be determined. The relative distance r may be determined directly without initial knowledge of a phase imbalance between the first and second antenna element. The method using frequency modulated radar signals can enable a determination of the relative distance r with higher accuracy because the waveform is amenable to the application of high-resolution methods such as multiple signal classification (MUSIC) and basis pursuit denoising (BPDN) to discriminate the component of the direct path between adjacent antennas from components due to multi-path contributions and reflections from farther antennas.

According to some embodiments, the frequency modulated radar signal is a linear frequency modulated chirp signal. The linear frequency modulated chirp signal can be a simple implementation of the frequency modulated radar signal. Determining the relative distance r can be enabled by estimating the beat frequency within the resulting beat signal.

According to some embodiments, the frequency modulated radar signal is a stepped frequency modulated signal. The stepped frequency modulated signal can be a simple implementation of the frequency modulated radar signal. Determining the relative distance r can be enabled by estimating the beat frequency within the resulting beat signal. Compared to the linear frequency modulated chirp signal, the stepped frequency modulated signal might not need a linearity in the frequency modulated waveform.

According to some embodiments transmitting the frequency modulated radar signal comprises transmitting successively a number of signals each having a constant frequency at a respective time period, wherein the respective time period is equal to or longer than the time period between transmitting the signal, having the constant frequency, and receiving the related signal, having the constant frequency. The stepped frequency modulated signal may be based on a number of signals having constant frequencies at sufficient time periods. By this technique, the relative distance r can be determined similarly to the technique described above in conjunction with the first and second antenna element using the first radar signal with the first frequency $f_1$ and the second radar signal with the second frequency $f_2$. The relative distance r can be determined accurately since the number of signals having constant frequencies can be down-converted, respectively.

According to some embodiments, estimating the beat frequency comprises using multiple signal classification (MUSIC). With MUSIC estimation of the beat frequency, and thus determination of the relative distance r, may be determined with higher accuracy.

According to some embodiments, estimating the beat frequency comprises using basis pursuit denoising (BPDN). With BPDN the beat frequency, and thus the relative distance r, can be determined more precisely.

Some embodiments relate to an antenna array. The antenna array comprises a first antenna element configured to transmit a first radar signal with a first frequency $f_1$ and a second radar signal with a second frequency $f_2$. The antenna array further comprises a second antenna element configured to receive a first receive signal related to the first radar signal and a second receive signal related to the second radar signal. Further, the antenna array comprises a control circuit configured to demodulate the first receive signal based on the first radar signal to obtain a first intermediate signal $s_1$ having a first phase $\varphi_1$ and demodulate the second receive signal based on the second radar signal to obtain a second intermediate signal $s_2$ having a second phase $\varphi_2$. The control circuit is further configured to determine a relative distance r between the first antenna element and the second antenna element based on the first phase $\varphi_1$ and the second phase $\varphi_2$. According to the proposed technique, online and/or offline calibration of the antenna array can be enabled by using the first and second antenna element of the antenna array in conjunction with a first and second radar signal being transmitted and received after propagation. Since calibration can be performed by means of the antenna elements of the antenna array, external devices for calibration might not be needed. Further, integration and application of a complex end-of-line calibration during manufacturing of the antenna array might not be necessary. With the proposed antenna array, large positional errors of the antenna elements may be determined precisely. Further, the relative distance can be determined directly, e.g. without knowledge of a phase imbalance between the first and second antenna element.

According to some embodiments, the antenna array further comprises a reflecting element being arranged outside a direct path between the first antenna element and the second antenna element and configured to reflect at least one of the first radar signal and the second radar signal to the second antenna element. The first and/or the second radar signal can be reflected by the reflecting element such that the reflected signal is received by the second antenna element. Accordingly, the second antenna element might not only receive signals directly from the first antenna element but may also receive indirect receive signals due to reflection on the reflective element (multi-path contribution). Using indirect receive signals in addition to direct signals may enable determination of the relative distance with higher accuracy if the indirect receive signals can be used for evaluation.

According to some embodiments, the antenna array further comprises an attenuating element being arranged outside a direct path between the first antenna element and the second antenna element and configured to attenuate at least one of the first radar signal and the second radar signal outside the direct path. The first and/or the second signal can be attenuated by the attenuating element outside the direct path. Accordingly, the second antenna element might be not able to receive receive signals being based on a reflection of the first and/or second signal. If these multi-path contributions increase noise and are not useable for determining the relative distance, mitigation of indirect receive signals may enable a determination of the relative distance with higher precision.

Some embodiments relate to an antenna array. The antenna array comprises a first antenna element configured to transmit a frequency modulated radar signal and a second antenna element configured to receive a receive signal related to the frequency modulated radar signal. The antenna array further comprises a control circuit configured to mix the receive signal with a copy of the frequency modulated radar signal to provide a beat signal. The control circuit is further configured to estimate a beat frequency within the beat signal and determine a relative distance r between the first antenna element and the second antenna element based on the beat frequency. Using the frequency modulated radar signal for determining the relative distance r can enable online and/or offline calibration of the antenna array. Calibration can be performed during the process of perceiving objects in the surrounding of the antenna array and thus without interrupting the operation procedure of the antenna array. Since calibration can be performed by means of the antenna elements of the antenna array, external devices for calibration might not be needed and complex end-of-line calibration during manufacturing of the antenna array might be avoided. With the proposed antenna array, large positional errors of the antenna elements can be determined. The relative distance r can be determined directly, e.g. without knowledge of a phase imbalance between the first and second antenna element. The antenna array using frequency modulated radar signals can enable a determination of the relative distance r with higher accuracy because the waveform is amenable to the application of high-resolution methods such as MUSIC and BPDN to discriminate the component of the direct path between adjacent antennas from components due to multi-path contributions and reflections from farther antennas.

According to some embodiments, the antenna array further comprises a reflecting element being arranged outside a direct path between the first antenna element and the second antenna element and configured to reflect the frequency modulated radar signal to the second antenna element. The first and/or the second radar signal can be reflected by the reflecting element such that the reflected signal is received by the second antenna element. Accordingly, the second antenna element might not only receive signals directly from the first antenna element but may also receive indirect receive signals due to reflection on the reflective element (multi-path contribution). Using indirect receive signals in addition to direct signals may enable determination of the relative distance with higher accuracy if the indirect receive signals can be used for evaluation.

According to some embodiments, the antenna array, further comprises an attenuating element being arranged outside a direct path between the first antenna element and the second antenna element and configured to attenuate the frequency modulated radar signal outside the direct path. The first and/or the second signal can be attenuated by the attenuating element outside the direct path. Accordingly, the second antenna element might be not able to receive receive signals being based on a reflection of the first and/or second signal. If these multi-path contributions increase a noise and are not useable for determining the relative distance, mitigation of indirect receive signals may enable a determination of the relative distance with higher precision.

Some embodiments relate to a vehicle comprising the antenna array as proposed. The control circuit is configured to update a previous value related to a spatial distance between the first and second antenna element by the value of the determined relative distance. With the proposed technique, online and/or offline calibration of large antenna arrays can be enabled for automotive application. For example, the proposed antenna array can be used to provide a 3D-image of the surroundings with high resolution. The vehicle might not need further components for calibrating the antenna array since determining the relative distance can be achieved by the integrated antennas of the antenna array.

**Brief description of the Figures**

Some examples of apparatuses and/or methods will be described in the following by way of example only, and with reference to the accompanying figures, in which

Fig. 1 illustrates a flowchart of an embodiment of a method for determining a relative distance r between a first antenna element and a second antenna element each being part of an antenna array;

Fig. 2 illustrates an embodiment of an antenna array;

Fig. 3 illustrates another embodiment of an antenna array;

Fig. 4 illustrates another embodiment of an antenna array;

Fig. 5 illustrates a flowchart of an embodiment of a method for determining a relative distance r between a first antenna element and a second antenna element each being part of an antenna array;

Fig. 6 illustrates an embodiment of an antenna array;

Fig. 7 illustrates an example for a linear frequency modulated chirp signal;

Fig. 8a illustrates another flowchart of an embodiment of a method for determining a relative distance r between a first antenna element and a second antenna element each being part of an antenna array;

Fig. 8b illustrates another flowchart of an embodiment of a method for determining a relative distance r between a first antenna element and a second antenna element each being part of an antenna array;

Fig. 9a illustrates another flowchart of an embodiment of a method for determining a relative distance r between a first antenna element and a second antenna element each being part of an antenna array; and

Fig. 9b illustrates a flowchart of a conventional method for determining a relative distance between a first antenna element and a second antenna element of an antenna array.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

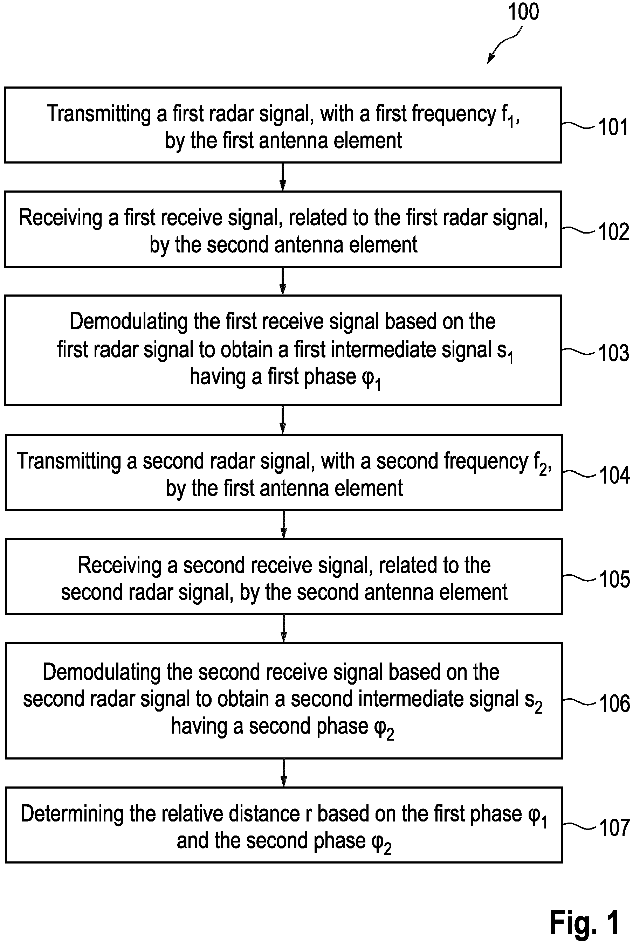

Fig. 1 shows a flowchart of an embodiment of a method 100 for determining a relative distance r between a first antenna element and a second antenna element each being part of an antenna array. The method 100 comprises transmitting 101 a first radar signal, with a first frequency $f_1$, by the first antenna element and receiving 102 a first receive signal, related to the first radar signal, by the second antenna element. The method 100 further comprises demodulating 103 the first receive signal based on the first radar signal to obtain a first intermediate signal $s_1$ having a first phase $\varphi_1$. Further, the method 100 comprises transmitting 104 a second radar signal, with a second frequency $f_2$, by the first antenna element and receiving 105 a second receive signal, related to the second radar signal, by the second antenna element. Further, the method 100 comprises demodulating 106 the second receive signal based on the second radar signal to obtain a second intermediate signal $s_2$ having a second phase $\varphi_2$ and determining 107 the relative distance r based on the first phase $\varphi_1$ and the second phase $\varphi_2$. The antenna array comprises the first and second antenna element. The first and second antenna element are arranged at a distance from each other. To determine the relative distance r between the first and second antenna element, the first antenna element (successively) transmits the first signal with the first frequency and the second signal with the second frequency (being different from the first frequency). After propagation of the first and second signal, the second antenna receives (successively) the first receive signal and the second receive signal. The first receive signal can be demodulated, e.g. by mixing the first receive signal with (a copy of) the first radar signal from a local oscillator to obtain the first intermediate (or beat) signal $s_1$ having a first phase $\varphi_1$. Similarly, the second receive signal can be demodulated, e.g. by mixing the second receive signal with (a copy of) the second radar signal from a local oscillator to obtain the second intermediate (or beat) signal $s_2$ having a second phase $\varphi_2$. The first and the second phase $\varphi_1$, $\varphi_2$ of the intermediate signal $s_1$, $s_2$ may comprise information on the relative distance r between the first and second antenna element. The first and the second intermediate signal can be combined (e.g. in order to substitute an unknown relative phase between the first and second antenna element) such that the relative distance r can be determined.

The method 100 may enable a calibration of the antenna array. Due to manufacturing errors or structural changes in the antenna array, a true value of the distance between antenna elements can be different from the nominal value. The proposed method may enable determination of the true value of the distance between the antenna elements. Accordingly, positional errors can be corrected, e.g. in the digital domain. The method 100 may enable an estimation of positional errors at ranges being greater than the wavelength, e.g. of the first or second radar signal. For example, positional errors being a multiple of the wavelength can be determined.

Since determination of the relative distance can be determined by using the first and second antenna element, additional components such as external antenna element or radiation sources might not be needed. Since the proposed method may enable an online and/or offline calibration of the antenna array, an end-of-line calibration in the manufacturing process of the antenna array may be less complicated or time-consuming or might not be needed at all. After calibration of the antenna array, perception of the surrounding can be improved with respect to spatial resolution capabilities.

The antenna array comprises (at least) the first and second antenna element and optionally further antenna elements. For example, the antenna array may have a uniform, non-uniform, sparse, equidistant or non-equidistant antenna element spacing. The antenna array may have a curved spatial structure with respect to two or three dimensions. The antenna array may be a component of a vehicle, e.g. an automobile, motorcycle, truck, train, airplane, ship etc. For example, the antenna array may be arranged close to the windscreen or bumper of the vehicle. The antenna array can be used to detect, track or identify objects in a surrounding of the vehicle. The antenna array can be used to determine a distance, an angle and/or a velocity of a static or moving object by using radar methods. By means of the antenna array, a 2D or 3D image (comprising spatial information) of the surrounding of the vehicle can be generated.

The first and second antenna (and optionally further antenna elements) are part of the antenna array. The antenna elements coherently form the antenna array. The antenna elements can be used for perceiving the surrounding of the antenna array. Principally, the antenna elements of the antenna array may be able to transmit and/or receive radar signals, e.g. to enable perception of the surrounding. According to the proposed method to determine the relative distance, the first antenna element transmits a first and second radar (or calibration) signal and the second antenna elements receives the first and second receive signals. The implementation of the first antenna element may be similar or equal to the implementation of the second antenna element. The first antenna element is arranged with a distance from the second antenna element. For example, the distance between the first and second antenna element may be equal to or greater than half of the wavelength of the first or second radar signal.

Manufacturing tolerances may exceed necessary precision of antenna placement for coherent antenna array operation. With the proposed method 100, the (true value of) relative distance between the first and second antenna element can be determined. The relative distance can be determined online (during operation of the antenna array for perceiving the surrounding, e.g. between transmission frames) or offline (e.g. prior or subsequent to the operation). Hence, estimation of fabrication errors and structural changes (e.g. due to thermal changes, mechanical torsions of the vehicle body, etc.) may be enabled. Since the (e.g. 2D or 3D) antenna array may undergo structural changes over time, the proposed method may be used for self-calibration of the antenna array or to determine a (current) shape of the antenna array.

The first and second radar signal may be a calibration signal, e.g. electromagnetic wave with a wavelength in the millimeter range (but not restricted to this), to enable determination of the relative distance r between the first and second antenna element. The relative distance r is given by the shortest (or direct) path between the first and second antenna element. The first and second receive signal may be the respective radar signal after propagation from the first antenna element to the second antenna element. The receive signal may differ from the transmitted radar signal with respect to phase and amplitude.

The first and second receive signal is demodulated, respectively. For example, each of the receive signals is mixed with a copy (or phase-shifted copy) of the transmitted radar signal (e.g. a reference signal provided by a local oscillator) to obtain the respective intermediate signal. Demodulation can be enabled by a circuit of a receiver module corresponding to the second antenna element. The circuit of the receiver module and e.g. external circuitry for processing the intermediate signal for determining the relative distance may form a control circuit. The external circuitry may be part of the antenna array (e.g. implemented on the carrier of the antenna array) or may be implemented in an external device such as in the electronic control circuit (ECU) of a vehicle.

The first intermediate signal comprises the first phase and the second intermediate signal comprises the second phase. The first and second intermediate signals may be a constant signal. The first and the second phase of the intermediate signals may comprise information on the relative distance r between the first and second antenna element. For example, the difference between the first and second phase can be computed to obtain the information on the relative distance. By using the first and second phase, a determination of a phase imbalance between the first and second antenna element might not be needed to conclude the relative distance. Further details regarding determination of the relative distance based on the first and second phase are described below in conjunction with an example for the first and second intermediate signal.

It is noted that the proposed method can be used in conjunction with a plurality of antenna element pairs to conclude on the different relative distances within the antenna array. For example, the relative distance can be determined between the first antenna element and a third antenna or between the third antenna element and a fourth antenna element etc. Hence, relative distances between (e.g. all) different antenna element pairs may be determined to calibrate the entire antenna array.

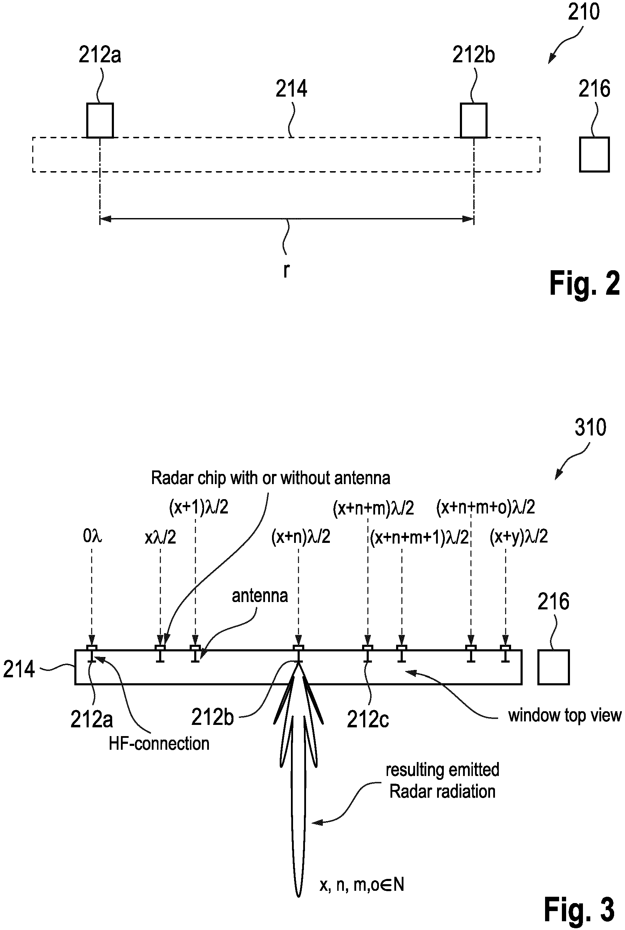

Although not explicitly illustrated in Fig. 1, the method 100 may comprise additional or optional steps. For example, the method 100 may comprise transmitting a third radar signal. The method 100 may comprise determining a phase imbalance $\psi$ between the first and second antenna element. Some exemplary methods describing further details of the proposed technique will be given in the following with reference to Figs. 2 to 4.

In the following, the proposed method for determining the relative distance between the first and second antenna element is described in conjunction with an antenna array. However, it is to be understood that aspects described hereafter can relate to the method for determining the relative distance and to the antenna array, respectively.

Fig. 2 shows an embodiment of an antenna array 210 (e.g. for a vehicle). The antenna array 210 comprises a first antenna element 212a configured to transmit a first radar signal with a first frequency $f_1$ and a second radar signal with a second frequency $f_2$. The antenna array 210 further comprises a second antenna element 212b configured to receive a first receive signal related to the first radar signal and a second receive signal related to the second radar signal. Further, the antenna array 210 comprises a control circuit 216 configured to demodulate the first receive signal based on the first radar signal to obtain a first intermediate signal $s_1$ having a first phase $\varphi_1$ and to demodulate the second receive signal based on the second radar signal to obtain a second intermediate signal $s_2$ having a second phase $\varphi_2$. The control circuit 216 is further configured to determine a relative distance r between the first antenna element and the second antenna element based on the first phase $\varphi_1$ and the second phase $\varphi_2$.

The implementation of the antenna array 210 can be similar to the implementation of the antenna array described in conjunction with the proposed method in Fig. 1. As indicated by the dashed lines, the antenna array 210 optionally comprises a carrier 214. The first and second antenna element 212a-b (and optionally the control circuit 216) may be arranged or implemented on the carrier. As exemplified, the carrier 214 may comprise a flat surface. According to other examples, the surface of the substrate may comprise a curvature (or bending) which may gradually change over time. The control circuit 216 determines the (e.g. changed) relative distance r between the first antenna element and the second antenna element based on the first and second phase of the respective intermediate signal.

Fig. 3 shows another embodiment of a (e.g. sparse, non-equidistant) antenna array 310. The antenna array 310 comprises a plurality of antenna elements (e.g. 212a-c) positioned in multiple distances larger than half of the wavelength of the radar signal. According to the example, the antenna elements 212a-c are coupled via a high-frequency (HF) connection to a radar chip for controlling and/or processing transmitted or received radar signals. The plurality of antenna elements 212a-c forms the antenna array 310 radiating (collectively) a radar signal e.g. to detect an object in the surrounding.

In the following, determining the relative distance based on the first and second phase is described in further detail.

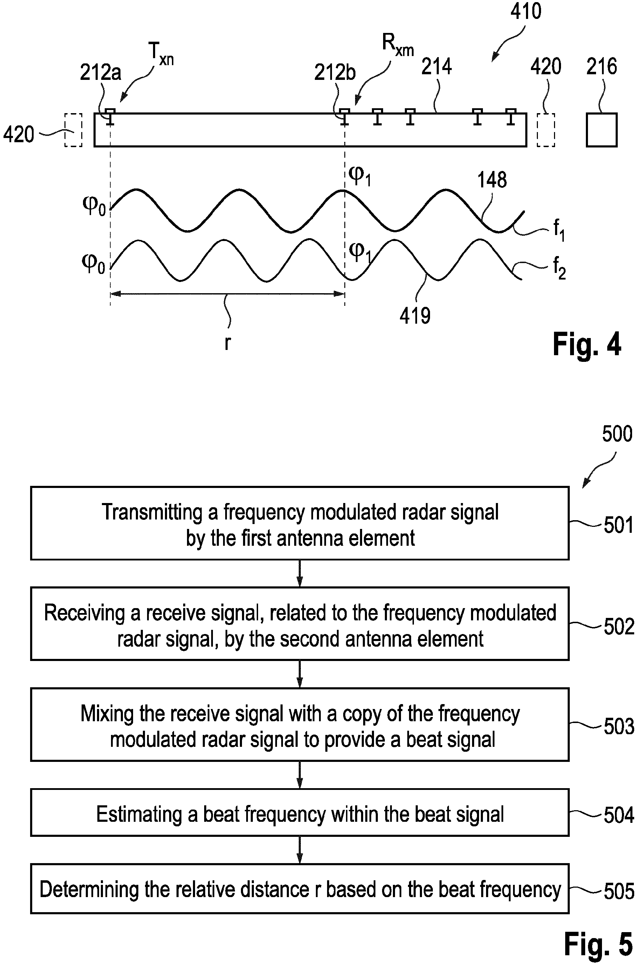

Fig. 4 shows another embodiment of an antenna array 410 in conjunction with a first radar signal 418 and a second radar signal 419 according to an example. The implementation of the antenna array 410 may be similar to the implementation of the antenna array 210, 310 described in conjunction with Fig. 2-3. For determining the relative distance r, the first antenna element 212a acts as a transmitting element (transmitter Tx) while one (or more) of the other (e.g. neighboring) antenna elements 212b acts as receiving element (receiver Rx). The first antenna element 212a transmits (e.g. successively) the first radar signal 418 and the second radar signal 419. The second antenna element 212b receives the first and second receive signal being related to the respective transmitted radar signal 418, 419. The first and the second antenna element 212a-b are separated by the relative distance r and with an unknown relative phase $\psi$ (or phase imbalance) which may be determined optionally.

The first antenna element 212a is used as a transmitter and the second antenna element as a receiver. The first antenna element 212a emits an electromagnetic wave, being the first radar signal 418 with constant frequency $f_1$. This wave may propagate into different directions in space. Among all propagation directions, a portion of the first radar signal 418 reaches the second antenna element on a direct path defined by the relative distance r.

The two receive signals differ in frequency and in phase. The phase difference may be computed after demodulation. The phase difference may be proportional to the relative distance r between the first and second antenna element and proportional to the difference in frequency $f_1 - f_2$. The first radar signal 418 can be described by

$$x(t) = a_1 \sin(2\pi f_1 t + \psi),$$

where $\psi \in [-\pi, \pi]$ denotes the unknown phase imbalance $\psi$ between the first and second antenna element 212a-b. The phase imbalance $\psi$ may comprise a known frequency-dependent constant that can be neglected. The constant $a_1$ may be a real positive number representing the amplitude of the first radar signal 418. The first receive signal can be described by

$$y(t) = A_1 \sin(2\pi f_1 (t - t_0) + \psi)\big|_{[t>t_0]},$$

where $t_0$ corresponds to the time delay due to propagation of the first radar signal from the first antenna element to the second antenna element along the direct path. $A_1$ may be the constant amplitude of the first receive signal. The amplitude $A_1$ may be smaller than the amplitude $a_1$ due to attenuation of the first radar signal while propagating. As described above, the first receive signal 418 is demodulated by means of the control circuit (e.g. being partly implemented in a receiver module coupled to the second antenna element 212b), by mixing the first receive signal 418 with (a copy of) the first radar signal from a local oscillator. A low-pass filter can be used to mitigate or eliminate signals related to the sum of the frequency components. Accordingly, the first intermediate signal $s_1$ can be obtained.

For example, the resulting first intermediate signal $s_1$ is a constant complex-valued signal being constant in time and being based on

$$s_1 = A_1 e^{j\phi_1} = A_1 e^{j(2\pi f_1 t_0 + \psi)}$$

with $t_0 = \dfrac{r}{c}$. As described above, $A_1$ relates to the amplitude of the first receive signal, $\psi$ relates to the phase imbalance between the first and second antenna element wherein c relates to the (propagation) velocity of the first radar signal 418. The first intermediate signal $s_1$ comprises the phase $\varphi_1$ being related to the relative distance r and the phase

imbalance $\psi$. Due to demodulation, the time varying component $f_1 t$ can be removed such that the intermediate signal $s_1$ is constant with $t > t_0$. Accordingly, the phase $\varphi_1$ of the intermediate signal $s_1$ can be described by

$$\phi_1 := \arg(s_1) = \frac{2\pi f_1 r}{c} + \psi - k_1 2\pi,$$

where $k_1$ denotes an unknown integer due to periodicity of the radar signal (modularity of the phase). (Requiring knowledge of the constant $A_1$ may be avoided by assuming I-Q demodulation.)

In addition to the measurement mentioned above in context with the first radar signal 418, a similar measurement using the second radar signal 419 with frequency $f_2$ is applied. The second frequency $f_2$ is different from the first frequency $f_1$. After demodulation (e.g. down-mixing and low-pass filtering), the second receive signal indicates the same unknown phase imbalance $\psi$ (up to a known frequency-dependent initial phase that can be neglected). Accordingly, the second intermediate signal $s_2$ may be a constant complex-valued signal being based on

$$s_2 = A_2 e^{j\phi_2} = A_2 e^{j(2\pi f_2 t_0 + \psi)}$$

$A_2$ relates to the amplitude of the second receive signal and c relates to the velocity of the second receive signal (which may be equal to the velocity of the first radar signal). The time delay $t_0 = \frac{r}{c}$ for reaching the second antenna element 212b is the same.

The second phase $\varphi_2$ of the second intermediate signal $s_2$ can be described by

$$\varphi_2 := \arg(s_2) = \frac{2\pi f_2 r}{c} + \psi - k_2 2\pi.$$

By subtracting the first phase from the second phase, best calculated in terms of the signal $\arg(s_2^* s_1)$, one obtains

$$\Delta\varphi := \arg(s_2^* s_1) = \varphi_1 - \varphi_2 = \frac{2\pi}{c} r(f_1 - f_2) - k' 2\pi,$$

where $k' := k_1 - k_2$ is an unknown integer resulting from the $2\pi$ modularity of the phase.

This model may allow to remove aliasing under certain conditions described below. The latter calculation does not require knowledge of the constants $A_i$ related to attenuation of the signals and that are usually unknown.

Due to k', the phase difference $\Delta\varphi$, and thus the relative distance r, may be ambiguous. The relative distance r may be determined without ambiguity if, e.g. the first and the second frequency are sufficiently close to each other as described next.

For example, to avoid said ambiguity, the first frequency $f_1$ and the second frequency $f_2$ may comply with

$$|2\pi(f_1 - f_2)t_0| < \pi.$$

As described above, $t_0$ is the time period between transmitting the first radar signal (or second radar signal) and receiving the first receive signal (or the second receive signal). Accordingly, the difference in the frequencies $f_1 - f_2$ is small compared to $t_0$. By assuming that IQ demodulation components are available, the named condition for the frequencies can be derived from $\arg(s_2^* s_1)$. If

$$|2\pi f_1 t_0 + \psi - (2\pi f_2 t_0 + \psi)| = |2\pi(f_1 - f_2)t_0| < \pi \Leftrightarrow |f_1 - f_2| < \frac{1}{2t_0} = \frac{c}{2r_0},$$

then the phase difference is non-ambiguous:

$$\phi_1 - \phi_2 = \arg(s_2^* s_1) = 2\pi(f_1 - f_2)t_0.$$

Accordingly, the two integers $k_1$, $k_2$ resulting from the periodicity are the same:

$$k' = k_1 - k_2 = 0.$$

This yields the unambiguous distance:

$$r = \frac{c}{2\pi} \frac{\arg(s_2^* s_1)}{(f_1 - f_2)}.$$

There may be a trade-off between ambiguity and sensitivity to noise. For example, the sensitivity to noise with similar frequencies can be reduced with longer observation periods. Alternatively (or additionally), more than two radar signals can be used such that several radar signal pairs are associated with close frequency values.

As described above, using two radar signals with similar frequencies may eliminate ambiguity. A third radar signal can be considered to estimate the relative distance r unambiguously and with reduced signal to noise ratio (SNR). For this purpose, the proposed method may further comprise transmitting at least a third radar signal, with a third frequency $f_3$, by the first antenna element and receiving at least a third receive signal, related to the at least third radar signal, by the second antenna element. The method comprises demodulating the at least third receive signal based on the at least third radar signal to obtain at least a third intermediate signal $s_3$ having a third phase $\varphi_3$. Further, the method comprises determining the relative distance r based on the first phase $\varphi_1$, second phase $\varphi_2$ and at least third phase $\varphi_3$. In other words, a further radar signal with a different frequency $f_3$ (compared to each of the frequencies $f_1$, $f_2$) is used in conjunction with the first and second antenna element 212a-b. The third radar signal may be similar to the first and second radar signal with respect to e.g. amplitude, phase imbalance and velocity (since the third radar signal may propagate along the same path). The third frequency $f_3$ of the third radar signal is different from the first and second frequency $f_1$, $f_2$, respectively. The third frequency may be similar to the first frequency and/or the second frequency such that

$$|2\pi(f_i - f_3)t_0| < \pi \text{ with } i \in \{1; 2\}.$$

Accordingly, two ($f_1$ and $f_2$ as well as $f_1$ and $f_3$) or three radar signal pairs ($f_1$ and $f_2$, $f_1$ and $f_3$ as well as $f_2$ and $f_3$) are associated with close frequency values.

The aspect considering several frequency pairs associated with close frequency values may avoid the trade-off between ambiguity reduction and the sensitivity to noise. This approach uses more than two distinct frequency measurements $f_1$, $f_2$, $f_3$,..., and formulates the equations for a given number of frequency pairs $(i,j) \in S \subset \{1,2,3,...\}$:

$$\left\{ \arg(s_j^* s_i) = \phi_i - \phi_j = \frac{2\pi(f_i - f_j)r}{c} - (k_{ij})2\pi \right\}_{i,j \in S}$$

The unknowns are, for each pair of antennas, the distance $r$, and the integers $k_{ij} = k_i - k_j$, with indexes i, j $\in$ S. For example, the system can be solved by using methods for mixed-integer programming such that the relative distance r can be determined by searching over the unknown integers. Using frequency values with pair-wise small differences allows to bound the integer differences $k_{ij}$ and may accelerate the search while the noise may be reduced thanks to the multiplicity of measurements.

According to the procedures mentioned above, every antenna element $m$ of the antenna array can be used as a sender together with every other receiving antenna element n. This provides distance measurements from every antenna element to every other antenna element. The plurality information may be collected in a matrix which can be treated as an over-determined system of equations such that the estimation for relative distance values can be calculated. This procedure results in higher accuracy e.g. by considering (merely) radar signals propagating from the first (or transmitting) antenna element to the second (or receiving) antenna element along the direct path.

According to another embodiment, the method further comprises determining a phase imbalance $\psi$ between the first and second antenna element 212a-b based on the relative distance r and at least one of the first phase $\varphi_1$ and the second phase $\varphi_2$. The phase imbalance describes the relative phase between the two channels. If the distance $r$ (or time delay $t_0$), is determined, the phase imbalance $\psi$ can be unambiguously derived from the above equation describing $\varphi_1$ and/or $\varphi_2$ (and/or other phases if further radar signals are used). The phase imbalance is unambiguous since it has values in $[\pi, \pi]$. If desired, the phase imbalance may be determined directly by combining the functions describing the first and second intermediate signal $s_1$, $s_2$ such that only the phase imbalance remains as the unknown variable.

It is noted that determining the relative distance r with respect to the aspects described above may be achieved by searching for the zero in a model or function. For example, finding the zero in the model for one (e.g. first) frequency may be as follows:

The model for a single frequency measurement, $s_1 = A_1 e^{j(2\pi f_1(r_h/c)+\psi)}$ may allow to compare the measured quantity $s_1$ with a prediction, $s_{1,pred}$, in terms of hypothesis $r_h$:

$$s_{1,\text{pred}}(r_h) := A_1 e^{j(2\pi f_1(r_h/c)+\psi)}.$$

One can formulate the problem of estimating the true hypothesis $r_h = r_0$ as a problem of finding the zeros of the function $s_1 - s_{1,pred}(r_h)$. It is noted that $|s_{1,pred}(r_h)| = 0$, and thus the model $|s_1 - s_{1,pred}(r_h)|$ is periodic with $\dfrac{\lambda}{2}$ . This approach may be useful to determine the relative distance with high accuracy.

Finding the zero in the model for two (e.g. first and second) frequencies may be as follows:

The model using two sufficiently close frequencies (in the case of having IQ components),

$$M(r) = \frac{s_1}{A_1} \, \text{conj}\left(\frac{s_2}{A_2}\right) = \exp\left(j\frac{2\pi(f_1-f_2)r}{c}\right),$$

may similarly allow to define a predicted signal $M(r_h)$ in terms of hypothesis $r_h$. The problem may be transformed into finding the zeros of

$$M(r) - M(r_h).$$

The proposed method may relate to a phase measurement with different frequencies using crosstalk between the antenna elements in order to determine relative antenna positioning and optionally phase imbalances. The steps to determine the relative distance and optionally the phase imbalance (for e.g. all antenna elements) in the antenna array may be based on:

i. First ($T_x$) antenna element with number n (e.g. $T_{xn}$) emits first radar signal with frequency $f_{1,n}$ ( $n, m \in \mathbb{N}$ )

ii. Fraction of the first radar signal (e.g. millimeter wave signal) propagates along the direction of the plane surface of the antenna array or curved antenna carrier material

iii. Second ($R_x$) antenna element with number m (e.g. $R_{xm}$) receives cross-talk radiation (first receive signal)

iv. First receive signal with frequency $f_{1,n}$ is demodulated, sampled, saved and its resulting phase $\varphi_{1n,m}$ is analyzed

v. First ($T_x$) antenna element with number n ($T_{xn}$) emits second radar signal with frequency $f_{2,n}$ ( $n, m \in \mathbb{N}$ )

vi. Fraction of the second radar signal (e.g. millimeter wave signal) propagates along the direction of the plane surface of the antenna array or curved antenna carrier material.

vii. Second ($R_x$) antenna element with number m ($R_{xm}$) receives crosstalk radiation (second receive signal)

viii. Second receive signal with frequency $f_{2,n}$ is demodulated, sampled, saved and its resulting phase $\varphi_{2n,m}$ is analyzed

ix. Difference phase $\Delta\varphi_{n,m} = \varphi_{1n,m} - \varphi_{2n,m}$ is evaluated, which is proportional to relative antenna position

x. After the distance between a pair of antennas is computed, the relative phase imbalance $\varphi_{n,m}$ is derived unambiguously from the expression for $\varphi_{1n,m}$ or $\varphi_{2n,m}$

xi. Iteration for all antennas of the array

Precise estimation of model mismatches, particularly antenna positions of all individual antenna elements, may be desired to reduce side lobe level (SLL) degradation, main lobe width, pointing error and/or power loss in digital beamforming techniques for angular determination of targets with high resolution. The nominal but inaccurate positions of the antenna elements may be given by the ideal positioning in series manufacturing. There, precision might be in the range of up to, e.g. 5 mm. The accuracy of an antenna array of that size may require a precision of 1/10 of the wavelength of the radar signal, which is, e.g. in the range of a few millimeters or several micrometers.

In some aspects, large position mismatches (e.g. in the range of a few wavelengths of the radar signal) of the antenna elements may be determined and changes of the antenna array configuration can be estimated. Relative positions of the antenna elements can be deduced directly without knowing the phase imbalances between antenna element pairs. In other words, the phase imbalances between channels can be decoupled from antenna position determination. Further, mutual antenna coupling can be decoupled among antenna element pairs if sufficient range resolution is achievable in the crosstalk measurements between individual antenna elements, e.g. in the context of sparse antenna arrays.

In some aspects, extrinsic changes to the antenna array may be compensated.

As indicated in Fig. 4 by the dashed lines, the antenna array 410 may optionally comprise one or more elements 420. For example, the antenna array 410 comprises a reflecting element 420 being arranged outside a direct path between the first antenna element 212a and the second antenna element 212b and configured to reflect at least one of the first radar signal 418 and the second radar signal 419 to the second antenna element 212b. In other words, the reflective element 420 (or reflective material or reflector) can reflect a portion of the (first and/or second) radar signal 418, 419 propagating outside the direct path. Due to the reflective element 420, that portion can be directed to the second (receiving) antenna element 212b. Hence, the second antenna element 212b can also receive radar signals propagating from the first antenna element 212a to the second antenna element 212b via an indirect path. This aspect regarding determining the relative distance r based on radar signal propagating also along the indirect path is in the following referred by multi-path propagation (or multipath contribution). The distance of the indirect path is longer than the distance associated with the direct path. Since some of the proposed techniques for determining the relative distance may use receive signals of indirect paths (see below), reflective elements 420 may enable direction of transmitted radar signals to the second antenna element 212b. The reflective elements 420 may be arranged e.g. at the border or outer area of the antenna array 410 or at any position such that transmission of the radar signals 418, 419 between the antenna elements 212a-b might not be disturbed. The reflective element 420 may be of any material and shape such that the radar signals 418, 419 from the first antenna element 212a can be reflected to the second antenna element 212b properly.

Alternatively (or additionally), the antenna array 410 may further comprise an attenuating element 420 being arranged outside the direct path between the first antenna element 212a and the second antenna element 212b and configured to attenuate at least one of the first radar signal 418 and the second radar signal 419 outside the direct path. In other words, the attenuating element (or attenuating material, attenuator or absorber) can attenuate or absorb a portion of the (first and/or second) radar signal 418, 419 propagating outside the direct path. The attenuating element 420 can inhibit or mitigate propagation of radar signals, associated to indirect paths, in the direction of the second antenna element 212b. Hence, the second antenna element 212b might (almost) not receive radar signals propagating from the first antenna element 212a to the second antenna element 212b via the indirect path. Since e.g. the proposed technique for determining the relative distance by using the first and second radar signal might not use multi-path contributions, attenuating elements 420 may enable a reduction of radar signals propagating along indirect paths. Accordingly, the relative distance r may be determined with higher accuracy due to a reduced nose level.

The attenuating element 420 may be arranged e.g. at the border or outer area of the surface of the antenna array such that transmission of the radar signals via the direct path might not be disturbed. This may enable a clearer measurement since multi-path contributions can be reduced or eliminated. The attenuating element may be of any material and shape suitable to attenuate, absorb radar signals or reduce the intensity of radar signals.

According to some other embodiments, the (reflective or attenuating) element 420 is integrated in the substrate of the antenna array. The element 420 may improve the wave propagation behavior from sender to receiver and may reduce disturbances during transmission. To avoid and/or to strengthen reflections, e.g. the boundary of the antenna array substrate can be conditioned by using proper reflective or attenuating materials.

More details and aspects are mentioned in connection with the examples described above or below. The example shown in Fig. 2 to 4 may comprise one or more optional additional features corresponding to one or more aspects mentioned in connection with the proposed concept or one or more examples described above or below (e.g. Figs. 5-9a).

In the following further techniques for determining a relative in conjunction with frequency modulated radar signals is described.

Fig. 5 shows a flowchart of an embodiment of a method 500 for determining a relative distance r between a first antenna element and a second antenna element each being part of an antenna array. The method 500 comprises transmitting 501 a frequency modulated radar signal by the first antenna element and receiving 502 a receive signal, related to the frequency modulated radar signal, by the second antenna element. The method 500 further comprises 503 mixing the receive signal with a copy of the frequency modulated radar signal to provide a beat signal. Further, the method 500 comprises estimating 504 a beat frequency within the beat signal and 505 determining the relative distance r based on the beat frequency. The antenna array comprises the first and second antenna element. The first and second antenna element are arranged at a distance from each other. The relative distance r relates to the shortest distance (along a direct path) between the first and second antenna element. For determining the relative distance between the first and second antenna element, the first antenna element transmits the frequency modulated radar signal. After a time delay, due to the distance between the first and second antenna element, the second antenna element receives the receive signal being based on the (propagated) frequency modulated radar signal. The receive signal is mixed with a copy of the transmitted frequency modulated radar signal (acting as a reference signal) to obtain the beat signal (or intermediate or mixed signal) comprising a number of frequency components. The beat frequency of the number of frequency components indicates the time delay between transmitting the frequency modulated radar signal and receiving the corresponding receive signal. Accordingly, the relative distance r is determined by identifying the beat frequency.

Due to manufacturing errors or structural deformation (e.g. based on thermal or mechanical effects) within the antenna array, the relative distance between antenna elements may be different from the nominal value. According to the proposed method, an online and/or offline calibration of the antenna array can be enabled. Compared to the method for determining a relative distance described in conjunction with Fig. 1-4, the relative distance might be determined more precisely since the increased resolution which results from using this waveform and high-resolution methods like MUSIC and BPDN, allows to discriminate the signal component of the direct path from components due to indirect paths (multipath contributions). Since the transmitted signal is frequency modulated, the relative distance can be determined unambiguously.

In the following, the proposed method 500 for determining the relative distance by using a frequency modulated radar signal is described in conjunction with an antenna array. However, it is to be understood that aspects described hereafter can relate to the method 500 for determining the relative distance and to the antenna array, respectively.

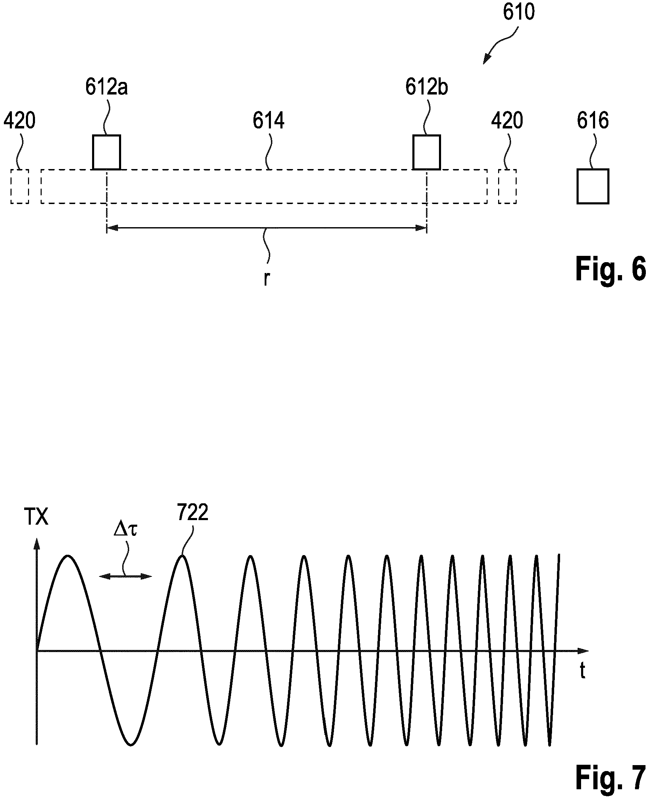

Fig. 6 shows an embodiment of an antenna array 610 (e.g. for a vehicle). The antenna array comprises a first antenna element 612a configured to transmit a frequency modulated radar signal and a second antenna element 612b configured to receive a receive signal related to the frequency modulated radar signal. The antenna array 610 further comprises a control circuit 616 configured to mix the receive signal with a copy of the frequency modulated radar signal to provide a beat signal. The control circuit 616 is further configured to estimate a beat frequency within the beat signal and determine a relative distance r between the first antenna element and the second antenna element based on the beat frequency.

The implementation of the first antenna element 612a, second antenna element 612b and antenna array 610 may be similar to the implementation of respective antenna elements and antenna array described above in conjunction with the Figs. 1-4.

According to some embodiments, the frequency modulated radar signal is a linear frequency modulated chirp signal. Fig. 7 shows a linear frequency modulated chirp signal 722 according to an example. The frequency of the linear frequency modulated chirp signal 722 increases linearly over time. The linear frequency modulated chirp signal 722 is received by the second antenna element 612b with a time delay. Accordingly, a difference in frequency occurs indicating the time delay between signal transmission and reception. Since the time delay can be determined and the propagation velocity of the radar signal is known, the relative distance can be determined.

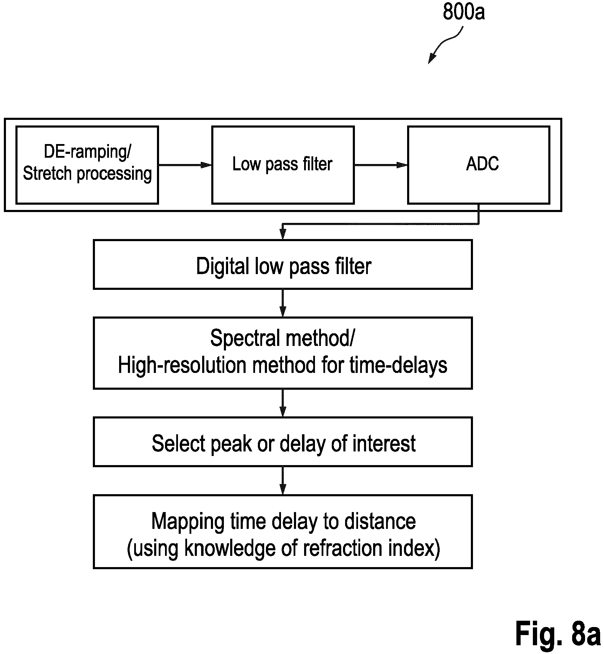

Fig. 8a shows another flowchart of an embodiment of a method 800a for determining the relative distance by using a linear frequency modulated chirp signal. The receive signal is mixed with the copy of the linear frequency modulated chirp signal (stretched-processing or de-ramping). To mitigate high frequency components caused by mixing, low-pass filtering can be applied, and the beat signal can be obtained. The resulting beat signal or intermediate signal is a superposition of frequency components including a beat frequency $f_b$ that is related to the relative distance of the corresponding receive signal. The beat signal is sampled and converted to digital by means of an analog-to-digital converter (ADC). The beat frequency of the beat signal is related to the relative distance by

$$r = f_b c \cdot \frac{\Delta T}{\Delta f}$$

since

$$\frac{f_b}{t_0} = \frac{B}{T} = \frac{\Delta f}{\Delta T}$$

applies for the beat frequency $f_b$, wherein $\Delta T$ is the time between two samples of the ADC and $\Delta f$ is the modulation increase between two sample points. The time T refers to the temporal duration and B to the spectral bandwidth of the linear frequency modulated chirp signal.

The relative distance can be derived from the time delay

$$t_0 = \frac{r}{c}$$

being related to the relative distance (or one-way path) between the first and second antenna element 612a-b.

As indicated in Fig. 8a, after analog-to-digital conversion, optionally a digital low pass filter (or range gate integrator or attenuating element as described above) is (optionally) applied to attenuate contributions from reflections beyond the diameter of the antenna array. The signal can be previously over-sampled to increase the performance of the digital low pass filter prior to estimation.

According to some embodiments, estimating the beat frequency comprises using multiple signal classification (MUSIC). Using MUSIC may enable an estimation of the beat frequency and thus determination of the relative distance with higher accuracy, e.g. compared to estimations based on standard periodogram, Discrete Fourier Transformation (DFT) or Fast Fourier Transformation (FFT). By using a frequency modulated radar signal, only a fraction of a cycle may be observed. Therefore, beat frequency estimation based on DFT and FFT may be less sufficient compared to MUSIC or sparse reconstruction methods such as Basis Pursuit Denoising (BPDN) which is described below in further detail. This aspect can be seen by considering the accumulated phase in terms of the beat frequency $f_B$ and the chirp duration $T_{dur}$:

$$f_B T_{dur} = R \frac{2B}{c} \, [\mathrm{rad}]$$

For example, $B = 1 GHz$ may imply a minimum distance of about $R \approx 77 \frac{\lambda}{2}$ produce one cycle. This may be insufficient for non-parametric methods such as DFT or periodogram.

Once the beat-frequency is estimated, e.g. by MUSIC or BPDN, the spectral phase for the corresponding receive signal $2\pi f_0 \tau = \frac{2\pi f_0 r}{c}$ in terms of the starting frequency $f_0$, can be leveraged to improve the accuracy of the estimation.

The proposed method may be suitable to estimate also larger relative distances between e.g. neighboring antenna elements of a sparse antenna array. For example, for a bandwidth of $B = 2 GHz$ or $4 GHz$, the proposed sparse reconstruction methods can resolve signals with a distance difference of 3 or 4 cm. The maximum-non ambiguous distance is given by Nyquist criterion $f_b \leq \frac{F_s}{2}$ in terms of the sampling frequency $F_s$ of the ADC, which yields $r_{\max} = \frac{F_s T c}{2B}$. This value may be greater than the value of the relative distance between antenna elements such that the relative distance may be determined unambiguously.

Using linear frequency modulated radar signals in combination with MUSIC or BPDN may enable the estimation of relative distance based on receive signals related to direct and indirect paths. Due to the frequency modulation, the relative distance may be determined without ambiguity. Further, the proposed method can be processed in parallel to normal operation mode of the antenna array. For example, the relative distance between the antenna elements can be determined according to the proposed technique while the antenna array is used to perceive the surrounding of the vehicle (comprising the antenna array). In some aspects, the proposed method may be performed every few frames with different parameters such as increased bandwidth. Regarding the computational load, the proposed calibration step might not need to be performed in every frame. The proposed method may be applied e.g. every few frames, or minutes, which may allow more time for computation. Further, the time and bandwidth of the frequency modulated chirp signal might not be constrained to achieve a large maximum non-ambiguous range as in the case of standard operation. This may allow to increase the bandwidth (and/or the time duration to satisfy the ADC constraints), and hence the resolution. On the computational side, subspace methods like MUSIC and Weighted Subspace Fitting, and sparse reconstruction methods such as BPDN, may improve the resolution by a good factor, e.g. by using a train of frequency modulated chirp signal and/or more frames.

According to some embodiments, the frequency modulated radar signal is a stepped frequency modulated signal. The stepped frequency modulated signal may comprise a number of signal portions having a constant frequency. For example, the stepped frequency modulated signal may comprise an increasing or decreasing frequency over time.

For example, transmitting the frequency modulated radar signal (being the stepped frequency modulated signal) comprises transmitting successively a number of signals each having a constant frequency at a respective time period. The respective time period is equal to or longer than the time period between transmitting the signal, having the constant frequency, and receiving the related signal, having the constant frequency. In other words, the stepped frequency modulated signal comprises signal portions indicating a constant frequency at a respective time period. Each of the respective time periods is at least as long as the time delay between transmitting and receiving the radar signal between the first and second antenna element.

If each of the frequency steps of the stepped frequency modulated signal is maintained for a sufficient time as proposed, the signal to noise ratio can be increased and the determination of the relative distance may be similar to the method described in conjunction with Fig. 1-4 using (at least) two radar signals of different frequencies.

With the proposed stepped frequency modulated signal, the same frequency is transmitted for sufficiently long time to receive the receive signal of interest. Accordingly, the respective portion of the receive signal (being related to the constant frequency) may be demodulated using a reference signal of a same frequency (similar to the method described above in conjunction with Fig. 1-4).

Using a stepped frequency modulated signal may enable to determine the relative distance without ambiguity, with high resolution and high accuracy. Compared to the method using the linear frequency modulated radar signal, a linearity in the frequency modulated waveform might not be needed.

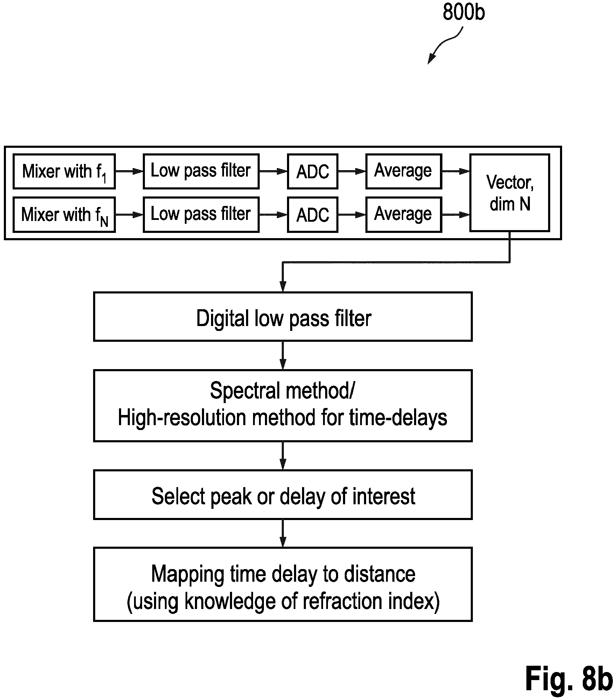

Further aspect of the method using the stepped frequency modulated signal are described in conjunction with Fig. 8b showing an embodiment of a method 800b for determining the relative distance based on the stepped frequency modulated signal.

In the following transmission with frequency $f_1$ is considered. The receive signal can be described by

$$y_1(t) = \sum_{k=1}^{K} A_{1k} \sin(2\pi f_1(t - t_k) + \psi_1)|_{[t > t_k]},$$

where $\{t_k\}$ are the time delays of the receive signal related to the direct path and further receive signals related to the indirect paths (multi-path contributions) of the signal portion (of the stepped frequency modulated signal) with frequency $f_1$. The phase $\psi_1$ contains the phase imbalance $\psi$ between the first antenna element (Tx) and the second antenna element (Rx), and any contribution to the phase that is frequency dependent and unknown is denoted by $\psi(f_i)$, i.e.,

$$\psi_i = \psi + \psi(f_i).$$

The receive signal can be mixed with a reference signal with frequency $f_1$ (down-conversion). After low-pass filtering the output can be described by

$$s_1 = \sum_{k=1}^{K} A_{1k} \sin(2\pi f_1 t_k + \psi_1)|_{[t > t_k]}.$$

This output signal is constant for each frequency measurement. The output signal can be sampled and averaged to increase the SNR. For each frequency step (or measurement) of the stepped frequency modulated signal one can obtain a vector of phase measurements for all the frequencies $f_1, ... f_N$.

Using the notation of imaginary exponentials, one can obtain

$$(s_1, ..., s_N) := \sum_{k=1}^{K} e^{j\psi} \left[ e^{j2\pi f_1 t_k}, ..., e^{j2\pi f_N t_k} \right] \odot [A_{1k}, ..., A_{Nk}] \odot \left[ e^{j\psi(f_1)}, ..., e^{j\psi(f_N)} \right].$$

It is noted that the starting frequency $f_0$ (of the stepped frequency modulated signal) might not be relevant since a common unknown frequency shift such as $f_0$ being added to all frequencies, $f_0 + f_1, .., f_0 + f_N$, can be factored out as follows:

$$(s_1, ... s_N) = e^{j\psi} \sum_{k=1}^{K} e^{j2\pi f_0 t_k} \left[ e^{j2\pi f_1 t_k}, ..., e^{j2\pi f_N t_k} \right] \odot [A_{1k}, ..., A_{Nk}] \odot \left[ e^{j\psi(f_1)}, ..., e^{j\psi(f_N)} \right],$$

where $e^{j2\pi f_c t_k}$ is path dependent but is common to all the frequency measurements.

By assuming that the amplitudes are frequency independent, or by using a normalization, one can obtain $A_{1k} = \cdots = A_{Nk} = A_k$. By assuming that the frequency-dependent phase delays are negligible, i.e., $\psi(f_1) = \cdots = \psi(f_N) = 0$, then the resulting signal may be described by:

$$(s_1, \ldots, s_N) := e^{j\psi} \sum_{k=1}^{K} A_k e^{j2\pi f_0 t_k} \left[ e^{j2\pi f_1 t_k}, \ldots, e^{j2\pi f_N t_k} \right].$$

This signal model may be different to the signal model described in conjunction with the linear frequency modulated chirp signal. For the signal model using the stepped frequency modulated signal, the phase may have the same mathematical relation to distance as the phase based on the beat signal related to the linear frequency modulated chirp signal. Further, the phase may be periodic over frequencies, whereas for the model using the linear frequency modulated chirp signal the beat signal may be periodic over time. With the stepped frequency modulated signal the relative distance can be determined without ambiguity. Compared to the method using a first and second radar signal (Figs. 1-4), resolution of multiple receive signals (in terms of multipath contribution) becomes possible.

For example, estimating the beat frequency comprises using BPDN. BPDN is an optimization algorithm which can be used to estimate the time delay being related to the relative distance to be determined. Compared to, e.g. DFT or FFT (or other non-parametric methods to determine the beat frequency), BPDN may enable to determine the relative distance with higher accuracy.

For example, the estimation of time delay can be written as a standard sparse reconstruction with 1-norm minimization or Basis Pursuit denoise formulation according to

$$\min_{\mathbf{x}} \|y - Bx\|_2^2 + \lambda \|x\|_1,$$

where $y = (s_1, \ldots, s_N)^T$ may be the down-converted signal samples with the dimension of number of frequencies and $B \in C^{N \times P}$ may be a matrix whose columns may correspond to the model evaluated in each hypothesis of single-echo time delay, i.e.,

$$B(:,p) = \left[ e^{j2\pi f_1 t_p}, \ldots, e^{j2\pi f_N t_p} \right] \text{ for } p \in \{1, \ldots, P\},$$

where $t_1, \ldots, t_P$ is a suitable grid of hypotheses for the time delays in the wanted superposition that is codified in the solution $x = [x_1, \ldots, x_P]$. This solution may approximate the complex amplitudes $x_p \approx A_p e^{j2\pi f_0 t_p}$ associated to the received signal portions or paths present in the signal. The hyper-parameter $\lambda$ can be tuned in terms of the noise level. The 1-norm may induce sparsity under the assumption that there are only a few multi-path contributions present in the signal (sparsity assumption). The received signal portions of interest correspond to the peaks of $x$, e.g. found upon thresholding. The number of the received signal portions does not need to be known.

Once the time delays are estimated, an estimation of the refractive index n of the antenna carrier material can be used. The relative distance can be determined according to

$$t = \frac{r}{c_{\text{material}}} = \frac{r}{\frac{c_0}{n}}.$$

Since different media indicates different refractive indices, different paths can be distinguished. For example, it may be possible to distinguish a time delay related to a direct path through air between the first and second antenna element and a time delay related to another direct path through the carrier material ranging between the first and second antenna element. Depending on the materials used for the antenna array and a preliminary evaluation of the permittivity, a hierarchy of paths can be established, wherein e.g. the first (e.g. shortest) path may be the path through the air, the second path may be the direct path through the carrier material and further paths may relate to non-direct paths (due to multi-path contributions). This aspect related to the determination of the relative distance in context with refractive indices is referred by the steps peak selection and mapping the time delay to distance in Fig. 8a-b. These (optional) steps may be part of the method for determining the relative distance based on a frequency modulated radar signal (e.g. being a linear frequency modulated chirp signal or stepped frequency modulated signal). The steps described in conjunction with the Figs. 8a-b may be computed by a control circuit which may be (partly) implemented in a receiver module coupled to the respective antenna element.

The method for determining the relative distance by using a frequency modulated radar signal may be based on the following steps:

i. First ($T_x$)-antenna element with number n ($T_{xn}$) emits a frequency modulated radar signal such as linear frequency modulated chirp signal or a stepped frequency modulated signal

ii. Fraction of frequency modulated radar signal (e.g. millimeter wave signal) propagates along the direction of the plane surface of the antenna array or curved carrier material

iii. Second antenna element (Rx or Tx-antenna) with number m ($R_{xm}$), e.g. in the neighborhood of the first antenna element, receives cross-talk radiation (receive signal), wherein $m \in \mathbb{N}$

iv. The receive signal is de-ramped (by mixing with the respective reference signal) and passed through a low-passed filter and sampled

v. Optionally, a digital low pass filter is applied, e.g. to attenuate reflections beyond the diameter of the array

vi. High-resolution methods including subspace and parametric methods such as MUSIC or BPDN are applied to determine the time delays

vii. The time delays are mapped to distances using an approximate characterization of the refractive index of the materials and a hierarchy of paths expected (e.g., direct path through air, if present, direct path through the antenna carrier material, and other non-direct paths. If desired, non-direct path contributions may be attenuated e.g. by using an attenuating element at the outer area or boundary of the antenna array (as described in conjunction with Fig. 4) and/or by a digital low pass filter

viii. After the relative distance between a pair of antenna elements is computed, the phase imbalance $\psi$ can be derived unambiguously (as described in conjunction with Figs. 1-4) or with a least square method since multiple frequency measurements are available

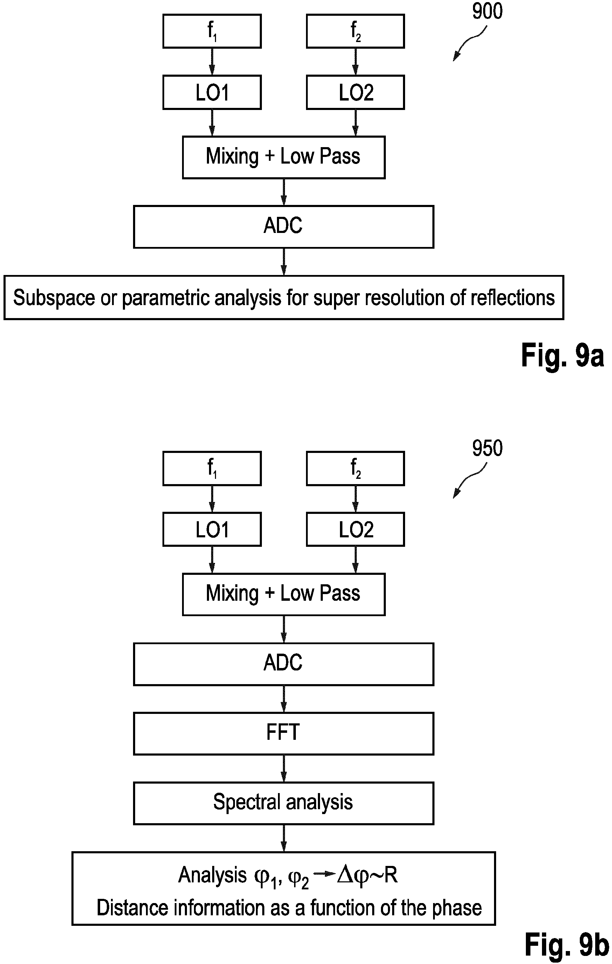

Fig. 9a shows another flowchart of an embodiment of a method 900 for determining the relative distance based on the stepped frequency modulated signal as described above. Each step frequency portion of the receive signal is mixed with a reference signal of the respective frequency. High-frequency components in the output are filtered by means of a low pass filter, the resulting beat signal is digitized and the time delay is estimated based on e.g. BPDN (parametric analysis). Compared to conventional (usual) methods using e.g. FFT and a spectral analysis to conclude on the relative distance (see Fig. 9b), the proposed method 900 may enable to estimate the time delay with higher precision and higher resolution. Hence, the relative distance may be determined more accurately. For example, while the DFT may require several cycles for reliable estimation, with the same bandwidth BPDN may enable an estimation of the relative distance below e.g. 1cm. For example, the DFT resolution (Rayleigh limit) is given by $\frac{c}{B}$ (for a one-way path between the first and second antenna element) which may be about 15cm for $B$ =2GHz. In comparison, BPDN may enable a higher resolution with e.g. less than 4cm for $B$ =2GHz.

Compared to conventional methods (e.g. 950 in Fig. 9b), the proposed techniques described in conjunction with Figs. 1-9a may enable to determine small relative distances between the first and second antenna element with higher accuracy and without ambiguity.

In some aspects, the proposed method (or antenna array) using the first and second signal (Fig. 1-4) may be applied in combination with attenuating elements such that receive signals related to multi-path contributions are mitigated. Accordingly, the relative distance may be determined more precisely.

In some aspects, embodiments of methods relate to a self-calibration of antenna positions in RADAR-arrays with large spatial dimensions by using antenna cross-talk.

In some aspects, online calibration of large antenna arrays may be possible in automotive application.

For example, a vehicle comprises one of the proposed antenna arrays as described in conjunction with Figs. 2 to 4 or Fig. 6. The control circuit of the antenna array may be configured to update a previous value related to a spatial distance between the first and second antenna element by the value of the determined relative distance. As described above, the previous value related to the spatial distance between the first and second antenna element may be incorrect or obsolete, e.g. due to manufacturing errors or structural changes in the antenna array. The control circuit is used to determine the (true) relative distance between the first and second antenna element. Accordingly, the control circuit can (e.g. digitally) replace or correct the previous value of the spatial distance by the value of the relative distance. The control circuit can use the value of the relative distance for further processing. After calibration, the antenna array may operate with higher performance since errors in the antenna array may be compensated or reduced. For example, the vehicle (e.g. motorcycle, car, truck, plane, drone etc.) may detect objects in a surrounding with higher accuracy or less errors.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods of the control circuit, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts (e.g. evaluating intermediate signals and phases and/or determining the relative distance) of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**List of reference signs**

| | |
|---|---|
| 100 | Method for determining a relative distance r between a first antenna element and a second antenna element each being part of an antenna array |

| 101 | Transmitting a first radar signal, with a first frequency $f_1$, by the first antenna element |
| 102 | Receiving a first receive signal, related to the first radar signal, by the second antenna element |
| 103 | Demodulating the first receive signal based on the first radar signal to obtain a first intermediate signal $s_1$ having a first phase $\varphi_1$ |
| 104 | Transmitting a second radar signal, with a second frequency $f_2$, by the first antenna element |
| 105 | Receiving a second receive signal, related to the second radar signal, by the second antenna element |
| 106 | Demodulating the second receive signal based on the second radar signal to obtain a second intermediate signal $s_2$ having a second phase $\varphi_2$ |
| 107 | Determining the relative distance r based on the first phase $\varphi_1$ and the second phase $\varphi_2$. |
| 210, 310, 410, 610 | Antenna array |
| 212a-c | Antenna element |
| 612-a-b 214, 614 | Carrier of antenna array |
| 216, 616 | Control circuit |
| 418 | First radar signal |
| 419 | Second radar signal |
| 420 | Reflective or attenuating element |
| 500, 800a 800b, 900 | Method for determining a relative distance r between a first antenna element and a second antenna element each being part of an antenna array |
| 501 | Transmitting a frequency modulated radar signal by the first antenna element |
| 502 | Receiving a receive signal, related to the frequency modulated radar signal, by the second antenna element |
| 503 | Mixing the receive signal with a copy of the frequency modulated radar signal to provide a beat signal |
| 504 | Estimating a beat frequency within the beat signal |
| 505 | Determining the relative distance r based on the beat frequency |
| 722 | Linear frequency modulated chirp signal |
| 950 | Conventional method for determining a relative distance |

**Claims**

1. A method (100) for determining a relative distance r between a first antenna element and a second antenna element each being part of an antenna array, comprising:

   transmitting (101) a first radar signal, with a first frequency $f_1$, by the first antenna element;
   receiving (102) a first receive signal, related to the first radar signal, by the second antenna element;
   demodulating (103) the first receive signal based on the first radar signal to obtain a first intermediate signal $s_1$ having a first phase $\varphi_1$;
   transmitting (104) a second radar signal, with a second frequency $f_2$, by the first antenna element;
   receiving (105) a second receive signal, related to the second radar signal, by the second antenna element;
   demodulating (106) the second receive signal based on the second radar signal to obtain a second intermediate signal $s_2$ having a second phase $\varphi_2$; and
   determining (107) the relative distance r based on the first phase $\varphi_1$ and the second phase $\varphi_2$.

2. The method (100) according to claim 1, wherein the first intermediate signal $s_1$ is a constant complex-valued signal being based on

$$s_1 = A_1 e^{j\phi_1} = A_1 e^{j(2\pi f_1 t_0 + \psi)} = A_1 e^{j\left(2\pi f_1 \frac{r}{c} + \psi\right)}$$ and the second intermediate signal $s_2$ is a constant com-

plex-valued signal being based on $s_2 = A_2 e^{j\phi_2} = A_2 e^{j(2\pi f_2 t_0 + \psi)} = A_2 e^{j\left(2\pi f_2 \frac{r}{c} + \psi\right)}$, wherein $A_1$ relates to the amplitude of the first receive signal and $A_2$ relates to the amplitude of the second receive signal, wherein c relates to the velocity of the respective radar signal being transmitted, wherein $\psi$ relates to a phase imbalance between the first and second antenna element.

3. The method (100) according to claim 1 or 2, further comprising:

determining a phase imbalance $\psi$ between the first and second antenna element based on the relative distance r and at least one of the first phase $\varphi_1$ and the second phase $\varphi_2$.

4. The method (100) according to one of the preceding claims, wherein
the first frequency $f_1$ and the second frequency $f_2$ comply with $|2\pi(f_1 - f_2)t_0| < \pi$ with to being the time period between transmitting the first radar signal and receiving the first receive signal.

5. The method (100) according to one of the preceding claims, further comprising:

transmitting at least a third radar signal, with a third frequency $f_3$, by the first antenna element;
receiving at least a third receive signal, related to the at least third radar signal, by the second antenna element;
demodulating the at least third receive signal based on the at least third radar signal to obtain at least a third intermediate signal $s_3$ having a third phase $\varphi_3$; and
determining the relative distance r based on the first phase $\varphi_1$, second phase $\varphi_2$ and at least third phase $\varphi_3$.

6. The method (100) according to claim 5, wherein
determining the relative distance r comprises using mixed-integer-programming.

7. A method (500, 800a, 800b, 900) for determining a relative distance r between a first antenna element and a second antenna element each being part of an antenna array, comprising:

transmitting (501) a frequency modulated radar signal by the first antenna element;
receiving (502) a receive signal, related to the frequency modulated radar signal, by the second antenna element,
mixing (503) the receive signal with a copy of the frequency modulated radar signal to provide a beat signal;
estimating (504) a beat frequency within the beat signal; and
determining (505) the relative distance r based on the beat frequency.

8. The method ()500 according to claim 7, wherein
the frequency modulated radar signal is a linear frequency modulated chirp signal.

9. The method (500) according to claim 7, wherein
the frequency modulated radar signal is a stepped frequency modulated signal.

10. The method according to claim 9, wherein
transmitting (501) the frequency modulated radar signal comprises transmitting successively a number of signals each having a constant frequency at a respective time period, wherein the respective time period is equal to or longer than the time period between transmitting the signal, having the constant frequency, and receiving the related signal, having the constant frequency.

11. The method according to one of the claims 7 to 10, wherein
estimating (504) the beat frequency comprises using multiple signal classification.

12. The method according to one of the claims 7 to 10, wherein
estimating (504) the beat frequency comprises using basis pursuit denoising.

13. An antenna array (210, 310, 410), comprising:

a first antenna element (212a) configured to transmit a first radar signal with a first frequency $f_1$ and a second radar signal with a second frequency $f_2$;
a second antenna element (212b) configured to receive a first receive signal related to the first radar signal and a second receive signal related to the second radar signal; and
a control circuit (216) configured to:

demodulate the first receive signal based on the first radar signal to obtain a first intermediate signal $s_1$ having a first phase $\varphi_1$,
demodulate the second receive signal based on the second radar signal to obtain a second intermediate signal $s_2$ having a second phase $\varphi_2$; and
determine a relative distance r between the first antenna element and the second antenna element based on the first phase $\varphi_1$ and the second phase $\varphi_2$.

14. The antenna array (410) according to claim 13 further comprising:

a reflecting element (420) being arranged outside a direct path between the first antenna element and the second antenna element and configured to reflect at least one of the first radar signal and the second radar signal to the second antenna element.

15. The antenna array according to claim 13 or 14, further comprising:
an attenuating element (420) being arranged outside a direct path between the first antenna element and the second antenna element and configured to attenuate at least one of the first radar signal and the second radar signal outside the direct path.

16. An antenna array (610), comprising:

a first antenna element (612a) configured to transmit a frequency modulated radar signal;
a second antenna element (612b) configured to receive a receive signal related to the frequency modulated radar signal; and
a control circuit (616) configured to:

mix the receive signal with a copy of the frequency modulated radar signal to provide a beat signal;
estimate a beat frequency within the beat signal; and
determine a relative distance r between the first antenna element and the second antenna element based on the beat frequency.

17. The antenna array (610) according to claim 16, further comprising:
a reflecting element (420) being arranged outside a direct path between the first antenna element and the second antenna element and configured to reflect the frequency modulated radar signal to the second antenna element.

18. The antenna array (610) according to claim 16 or 17, further comprising:
an attenuating element (420) being arranged outside a direct path between the first antenna element and the second antenna element and configured to attenuate the frequency modulated radar signal outside the direct path.

19. A vehicle, comprising:

an antenna array (210, 310, 410, 610) according to one of the claims 13 to 18; wherein
the control circuit (216, 616) is configured to update a previous value related to a spatial distance between the first and second antenna element by the value of the determined relative distance.

**Amended claims in accordance with Rule 137(2) EPC.**

1. A method (100) for determining a relative distance r between a first antenna element and a second antenna element each being part of an antenna array, comprising:

transmitting (101) a first radar signal, with a first frequency $f_1$, by the first antenna element;
receiving (102) a first receive signal, related to the first radar signal, by the second antenna element;
demodulating (103) the first receive signal based on the first radar signal to obtain a first intermediate signal $s_1$ having a first phase $\varphi_1$;
transmitting (104) a second radar signal, with a different second frequency $f_2$, by the first antenna element;
receiving (105) a second receive signal, related to the second radar signal, by the second antenna element;
demodulating (106) the second receive signal based on the second radar signal to obtain a second intermediate signal $s_2$ having a second phase $\varphi_2$; and
determining (107) the relative distance r based on the first phase $\varphi_1$ and the second phase $\varphi_2$,
wherein the first receive signal and the second receive signal are propagating via a direct path from the first antenna element to the second antenna element.

2. The method (100) according to claim 1, wherein

the first intermediate signal $s_1$ is a constant complex-valued signal being based on

$$s_1 = A_1 e^{j\phi_1} = A_1 e^{j(2\pi f_1 t_0 + \psi)} = A_1 e^{j\left(2\pi f_1 \frac{r}{c} + \psi\right)}$$ and the second intermediate signal $s_2$ is a constant complex-valued signal being based on $$s_2 = A_2 e^{j\phi_2} = A_2 e^{j(2\pi f_2 t_0 + \psi)} = A_2 e^{j\left(2\pi f_2 \frac{r}{c} + \psi\right)}$$ , wherein $A_1$ relates to the amplitude of the first receive signal and $A_2$ relates to the amplitude of the second receive signal, wherein c relates to the velocity of the respective radar signal being transmitted, wherein $\psi$ relates to a phase imbalance between the first and second antenna element.

3. The method (100) according to claim 1 or 2, further comprising:
determining a phase imbalance $\psi$ between the first and second antenna element based on the relative distance r and at least one of the first phase $\varphi_1$ and the second phase $\varphi_2$.

4. The method (100) according to one of the preceding claims, wherein
the first frequency $f_1$ and the second frequency $f_2$ comply with $|2\pi(f_1 - f_2)t_0| < \pi$ with to being the time period between transmitting the first radar signal and receiving the first receive signal.

5. The method (100) according to one of the preceding claims, further comprising:

transmitting at least a third radar signal, with a third frequency $f_3$, by the first antenna element;
receiving at least a third receive signal, related to the at least third radar signal, by the second antenna element;
demodulating the at least third receive signal based on the at least third radar signal to obtain at least a third intermediate signal $s_3$ having a third phase $\varphi_3$; and
determining the relative distance r based on the first phase $\varphi_1$, second phase $\varphi_2$ and at least third phase $\varphi_3$.

6. The method (100) according to claim 5, wherein
determining the relative distance r comprises using mixed-integer-programming.

7. A method (500, 800a, 800b, 900) for determining a relative distance r between a first antenna element and a second antenna element each being part of an antenna array, comprising:

transmitting (501) a frequency modulated radar signal by the first antenna element;
receiving (502) a receive signal, related to the frequency modulated radar signal, by the second antenna element,
mixing (503) the receive signal with a copy of the frequency modulated radar signal to provide a beat signal;
estimating (504) a beat frequency within the beat signal; and
determining (505) the relative distance r based on the beat frequency, wherein the receive signal is propagating via a direct path from the first antenna element to the second antenna element.

8. The method ()500 according to claim 7, wherein
the frequency modulated radar signal is a linear frequency modulated chirp signal.

9. The method (500) according to claim 7, wherein
the frequency modulated radar signal is a stepped frequency modulated signal.

10. The method according to claim 9, wherein
transmitting (501) the frequency modulated radar signal comprises transmitting successively a number of signals each having a constant frequency at a respective time period, wherein the respective time period is equal to or longer than the time period between transmitting the signal, having the constant frequency, and receiving the related signal, having the constant frequency.

11. The method according to one of the claims 7 to 10, wherein
estimating (504) the beat frequency comprises using multiple signal classification.

12. The method according to one of the claims 7 to 10, wherein
estimating (504) the beat frequency comprises using basis pursuit denoising.

13. An antenna array (210, 310, 410), comprising:

a first antenna element (212a) configured to transmit a first radar signal with a first frequency $f_1$ and a second radar signal with a different second frequency $f_2$;
a second antenna element (212b) configured to receive a first receive signal related to the first radar signal and a second receive signal related to the second radar signal; and
a control circuit (216) configured to:

demodulate the first receive signal based on the first radar signal to obtain a first intermediate signal $s_1$ having a first phase $\varphi_1$;
demodulate the second receive signal based on the second radar signal to obtain a second intermediate signal $s_2$ having a second phase $\varphi_2$; and
determine a relative distance r between the first antenna element and the second antenna element based on the first phase $\varphi_1$ and the second phase $\varphi_2$ wherein the first receive signal and the second receive signal are propagating via a direct path from the first antenna element to the second antenna element.

14. The antenna array (410) according to claim 13 further comprising:
a reflecting element (420) being arranged outside a direct path between the first antenna element and the second antenna element and configured to reflect at least one of the first radar signal and the second radar signal to the second antenna element.

15. The antenna array according to claim 13 or 14, further comprising:
an attenuating element (420) being arranged outside a direct path between the first antenna element and the second antenna element and configured to attenuate at least one of the first radar signal and the second radar signal outside the direct path.

16. An antenna array (610), comprising:

a first antenna element (612a) configured to transmit a frequency modulated radar signal;
a second antenna element (612b) configured to receive a receive signal related to the frequency modulated radar signal; and
a control circuit (616) configured to:

mix the receive signal with a copy of the frequency modulated radar signal to provide a beat signal;
estimate a beat frequency within the beat signal; and
determine a relative distance r between the first antenna element and the second antenna element based on the beat frequency, wherein the receive signal is propagating via a direct path from the first antenna element to the second antenna element.

17. The antenna array (610) according to claim 16, further comprising:
a reflecting element (420) being arranged outside a direct path between the first antenna element and the second antenna element and configured to reflect the frequency modulated radar signal to the second antenna element.

18. The antenna array (610) according to claim 16 or 17, further comprising:
an attenuating element (420) being arranged outside a direct path between the first antenna element and the second antenna element and configured to attenuate the frequency modulated radar signal outside the direct path.

19. A vehicle, comprising:

an antenna array (210, 310, 410, 610) according to one of the claims 13 to 18; wherein
the control circuit (216, 616) is configured to update a previous value related to a spatial distance between the first and second antenna element by the value of the determined relative distance.

100

| Transmitting a first radar signal, with a first frequency $f_1$, by the first antenna element | ~101 |

| Receiving a first receive signal, related to the first radar signal, by the second antenna element | ~102 |

| Demodulating the first receive signal based on the first radar signal to obtain a first intermediate signal $s_1$ having a first phase $\varphi_1$ | ~103 |

| Transmitting a second radar signal, with a second frequency $f_2$, by the first antenna element | ~104 |

| Receiving a second receive signal, related to the second radar signal, by the second antenna element | ~105 |

| Demodulating the second receive signal based on the second radar signal to obtain a second intermediate signal $s_2$ having a second phase $\varphi_2$ | ~106 |

| Determining the relative distance r based on the first phase $\varphi_1$ and the second phase $\varphi_2$ | ~107 |

Fig. 1

**Fig. 2**

**Fig. 3**

**Fig. 4**

| Transmitting a frequency modulated radar signal by the first antenna element | 501 |

| Receiving a receive signal, related to the frequency modulated radar signal, by the second antenna element | 502 |

| Mixing the receive signal with a copy of the frequency modulated radar signal to provide a beat signal | 503 |

| Estimating a beat frequency within the beat signal | 504 |

| Determining the relative distance r based on the beat frequency | 505 |

**Fig. 5**

610

612a                                      612b
420                    614                              420              616

r

**Fig. 6**

TX        Δτ        722

t

**Fig. 7**

800a

```
┌─────────────────────────────────────────────────────────────────────┐
│  ┌──────────────────┐      ┌──────────────────┐    ┌──────────────┐   │
│  │   DE-ramping/    │      │                  │    │              │   │
│  │ Stretch processing│ ──▶ │  Low pass filter │ ─▶ │     ADC      │   │
│  └──────────────────┘      └──────────────────┘    └──────────────┘   │
└─────────────────────────────────────────────────────────────────────┘
```

**Digital low pass filter**

**Spectral method/**
**High-resolution method for time-delays**

**Select peak or delay of interest**

**Mapping time delay to distance**
**(using knowledge of refraction index)**

**Fig. 8a**

800b

```
Mixer with f₁ ──▶ Low pass filter ──▶ ADC ──▶ Average ──▶ ┌──────────┐
Mixer with fₙ ──▶ Low pass filter ──▶ ADC ──▶ Average ──▶ │ Vector,  │
                                                          │ dim N    │
                                                          └──────────┘
```

Digital low pass filter

Spectral method/
High-resolution method for time-delays

Select peak or delay of interest

Mapping time delay to distance
(using knowledge of refraction index)

**Fig. 8b**

900

| $f_1$ | | $f_2$ |
|-------|--|-------|

| LO1 | | LO2 |
|-----|--|-----|

Mixing + Low Pass

ADC

Subspace or parametric analysis for super resolution of reflections

**Fig. 9a**

950

| $f_1$ | | $f_2$ |
|-------|--|-------|

| LO1 | | LO2 |
|-----|--|-----|

Mixing + Low Pass

ADC

FFT

Spectral analysis

Analysis $\varphi_1$, $\varphi_2 \rightarrow \Delta\varphi \sim R$
Distance information as a function of the phase

**Fig. 9b**

Europäisches
Patentamt

European
Patent Office

Office européen
des brevets

# EUROPEAN SEARCH REPORT

Application Number

EP 21 19 1980

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FIKES AUSTIN C ET AL: "Flexible, Conformal Phased Arrays with Dynamic Array Shape Self-Calibration", 2019 IEEE MTT-S INTERNATIONAL MICROWAVE SYMPOSIUM (IMS), IEEE, 2 June 2019 (2019-06-02), pages 1458-1461, XP033579672, [retrieved on 2019-04-26] * figure 4 * * page 1459, right-hand column, lines 23-43 * * page 1460, left-hand column, lines 7-21, 32-42 * * page 1460, right-hand column, lines 1-13, 21-22 * * page 1461, right-hand column, lines 1-4 * | 1-19 | INV. G01S7/40 G01S13/34 G01S13/38 G01S13/42 G01S13/931 G01S13/02 H01Q3/26 |
| X A | US 2019/140349 A1 (FIKES AUSTIN [US] ET AL) 9 May 2019 (2019-05-09) * paragraphs [0003], [0040], [0042], [0052], [0063], [0076], [0077] * | 7-12, 16-19 1-6, 13-15 | TECHNICAL FIELDS SEARCHED (IPC) G01S H01Q |

The present search report has been drawn up for all claims

| Place of search | Date of completion of the search | Examiner |
|---|---|---|
| Munich | 26 January 2022 | Rodríguez González |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
..................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 21 19 1980

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2022

| Patent document cited in search report | Publication date | Patent family member(s) | Publication date |
|---|---|---|---|
| US 2019140349 A1 | 09-05-2019 | NONE | |

EPO FORM P0459